(19) Europäisches Patentamt
European Patent Office
Office européen des brevets

(11) **EP 4 611 404 A1**

(12) **EUROPEAN PATENT APPLICATION**
published in accordance with Art. 153(4) EPC

(43) Date of publication:
**03.09.2025 Bulletin 2025/36**

(21) Application number: **23881197.0**

(22) Date of filing: **24.05.2023**

(51) International Patent Classification (IPC):
**H04W 4/029** (2018.01)

(52) Cooperative Patent Classification (CPC):
**G06T 17/05; H04W 4/029; H04W 64/00**

(86) International application number:
**PCT/CN2023/096081**

(87) International publication number:
**WO 2024/087605 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.10.2022 CN 202211338992**

(71) Applicant: **ZTE Corporation**
**Shenzhen, Guangdong 518057 (CN)**

(72) Inventors:
• **CHEN, Shijun**
  **Shenzhen, Guangdong 518057 (CN)**

• **LI, Junqiang**
  **Shenzhen, Guangdong 518057 (CN)**
• **CHEN, Dawei**
  **Shenzhen, Guangdong 518057 (CN)**
• **CHENG, Wei**
  **Shenzhen, Guangdong 518057 (CN)**
• **LIN, Xu**
  **Shenzhen, Guangdong 518057 (CN)**

(74) Representative: **Casalonga**
**Casalonga & Partners**
**Bayerstraße 71/73**
**80335 München (DE)**

(54) **MULTI-TARGET TRAJECTORY DECOMPOSITION OBSERVATION METHOD, ELECTRONIC DEVICE, AND STORAGE MEDIUM**

(57) A multi-target trajectory decomposition observation method, which comprises: obtaining a sensing signal at a present moment, and based on the sensing signal at the present moment, sensing the position information and signal energy of each of a plurality of targets; according to the position information and signal energy of each target, displaying on a map a sensing point for each target; based on the plurality of sensing points displayed at the present moment on the map and based on a plurality of historical sensing points displayed in a period of time preceding the present moment, determining motion trajectories, wherein each motion trajectory is used for representing one presently-moving target; and decomposing the sensing information of one or more sensed presently-moving targets to one or more channels for output.

FIG. 2

**Description**

CROSS-REFERENCE TO RELATED APPLICATION(S)

This application claims a priority to Chinese Patent Application No. 202211338992.X, filed on October 28, 2022, the disclosure of which is hereby incorporated by reference in its entirety.

TECHNICAL FIELD

The present disclosure relates to the field of data processing technology, in particular, to a multi-target trajectory decomposition observation method, an electronic device and a storage medium.

BACKGROUND

Ubiquitous sensing is an emerging research direction where multiple fields, such as ubiquitous computing, mobile computing, human-computer interaction, the Internet of Things, and artificial intelligence, intersects with each other. The ubiquitous sensing refers to a multi-modal sensing for people and environment through a camera, an accelerometer, a gyroscope, a wireless communication (WiFi) device, a long term evolution (Long Term Evolution, LTE) device, a millimeter wave radar, or an acoustic transceiver device, so as to utilize signal processing and artificial intelligence methods to analyze the sensed information, to obtain a state of a sensed object in the environment.

SUMMARY

In one aspect, a multi-target trajectory decomposition observation method is provided in the embodiments of the present disclosure, the method includes: acquiring a sensing signal at a current moment, and sensing location information and signal energy of respective targets of a plurality of targets based on the sensing signal at the current moment; displaying sensing points of the respective targets on a map according to the location information and the signal energy of the respective targets; determining motion trajectories based on a plurality of sensing points displayed on the map at the current moment and a plurality of historical sensing points displayed within a time period before the current moment, where each motion trajectory is used to characterize a moving target; decomposing sensed information of one or more moving targets that are sensed on one or more channels for outputting.

It can be understood that the sensing points of the respective targets are displayed on the map based on the acquired sensing signal, the sensing points displayed on the map can intuitively show locations of the respective targets, which is convenient for a user to view. In this method, the moving targets indicated by the motion trajectories are decomposed on the one or more channels based on the motion trajectories within the time period for outputting. Therefore, for a complex environment with multiple targets, a situation where trajectories of multiple targets intersect with each other, which is inconvenient for checking, can be avoided, and the trajectories of the respective targets and other sensed information can be effectively identified and distinguished, and further, the accuracy of multi-target trajectory displaying and recognition can be improved.

In some embodiments, the above-mentioned displaying the sensing points of the respective targets in the map according to the location information and the signal energy of the respective targets includes: determining location information of pixel points occupied by the sensing points of the respective targets in the map according to the location information of the respective targets; determining pixel values of the pixel points occupied by the sensing points of the respective targets in the map according to the signal energy of the respective targets; displaying the sensing points of the respective targets in the map according to the location information and the pixel values of the pixel points occupied by the sensing points of the respective targets in the map.

It can be understood that based on the location information and the signal energy of the respective targets, the sensing points of the respective targets are displayed on the map, where the sensing points are located at corresponding locations of the respective targets in the map. The locations of the respective targets can be intuitively displayed on the map through the sensing points, and the signal energy of the respective targets can also be displayed.

In some embodiments, the above-mentioned determining the location information of the pixel points occupied by the sensing points of the respective targets in the map according to the location information of the respective targets includes: determining location information of center pixel points of the respective targets in the map according to the location information of the respective targets; and determining the location information of the pixel points occupied by the sensing points in the map based on the location information of the center pixel points of the respective targets, shape information of the sensing points and size information corresponding to the sensing points.

In some embodiments, the above-mentioned determining the pixel values of the pixel points occupied by the sensing points of the respective targets in the map based on the signal energy of the respective targets includes: acquiring first pixel values of the pixel points occupied by the sensing points from the map based on the location information of the pixel points occupied by the sensing points of the respective targets in the map; obtaining second pixel values of the pixel points occupied by the sensing points by performing color inversion processing on the first pixel values of the pixel points occupied by the sensing points; and obtaining the pixel values of the pixel points occupied by the sensing points by performing fusion processing on the first pixel values and the second pixel values of the pixel points occupied by the sensing points based on the signal energy of the respective targets.

It can be understood that, in this embodiment, an image displaying effect of an image block corresponding to the pixel values obtained by performing color inversion processing is significantly different from a displaying effect of an image block without the processing. In this way, by performing fusion processing on the two images, the image block corresponding to the sensing point and finally determined can be adjusted to be different from a map background at this location.

In some embodiments, the above-mentioned obtaining the pixel values of respective pixel points in image blocks corresponding to the sensing points by performing fusion processing on the first pixel values and the second pixel values of the respective pixel points in the image blocks corresponding to the sensing points based on the signal energy of the respective targets includes: determining first weights corresponding to the first pixel values and second weights corresponding to the second pixel values based on the signal energy of the respective targets, where there is a positive correlation between the signal energy of the respective targets and the second weights, and there is a negative correlation between the signal energy of the respective targets and the first weights; and obtaining the pixel values of the respective pixel points in the image blocks corresponding to the sensing points by performing weighting processing on the first pixel values and the second pixel values of the respective pixel points in the image blocks corresponding to the sensing points based on the first weights and the second weights.

It can be understood that in this embodiment, a large number of sensing points of the plurality of targets can be displayed on the map simultaneously, and displaying effects of the sensing points are related to energy values of the respective targets. The energy value is used to determine a degree of a difference between a displaying effect of a sensing point on the map and a displaying effect of a map background without displaying the sensing point. On the one hand, for a target with higher energy, i.e., a target that may be in a motion state, a sensing point of the target can be clearly displayed at a certain moment, and a plurality of sensing points of the target in nearby locations can further be clearly displayed within a time period, so as to facilitate the observation of the motion trajectory. On the other hand, for a target with lower energy, a displaying effect of a sensing point may be similar to that of map background at a certain moment. In this way, a sense of presence of the sensing point on the map may be reduced, thus the motion trajectory of the target in the motion state can be displayed more intuitively on the map.

In some embodiments, the above-mentioned determining the first weights corresponding to the first pixel values and the second weights corresponding to the second pixel values based on the signal energy of the respective targets includes: determining a maximum signal energy value and a minimum energy value among the signal energy of the plurality of targets; determining ratios between differences of the signal energy of the respective targets minus the minimum energy value and a difference of the maximum signal energy value minus the minimum energy value as the second weights; and determining the first weights according to the second weights.

In some embodiments, after above-mentioned determining the motion trajectories based on the plurality of sensing points displayed on the map at the current moment and the plurality of historical sensing points displayed within the time period before the current moment, the method further includes: adjusting pixel values of pixel points occupied by the sensing points in the motion trajectories in the map by increasing second weights of the sensing points in the motion trajectories.

It can be understood that the second weights of the respective sensing points in the motion trajectories are increased and the pixel values of the pixel points in the sensing points that constitute the motion trajectories are adjusted again, so that the displaying effects of the sensing points and the displaying effects of the map background that does not display the sensing points will be more significantly different, thereby resulting in the displaying of the motion trajectories of the targets on the map more intuitive.

In some embodiments, a plurality of groups of sensing points is determined according to the plurality of sensing points displayed on the map at the current moment and the plurality of historical sensing points displayed within the time period before the current moment mentioned above, where a number of sensing points in one group of sensing points is greater than a preset number, and in any group of sensing points, a time interval between sensing times of any two adjacent sensing points is less than a preset duration, and a distance between the two sensing points is less than a preset distance; each of the plurality of groups of sensing points is determined as a motion trajectory respectively.

In some embodiments, the sensed information includes one or more of location information, signal energy, a motion parameter, or a motion trajectory within a time period before the current moment.

In some embodiments, one channel is used to output sensed information of one moving target; or one channel is used to output sensed information of a plurality of moving targets.

In another aspect, a multi-target trajectory decomposition observation apparatus is provided, where the apparatus includes:

a communication module, configured to acquire a sensing signal at a current moment, and sense location information and signal energy of respective targets of a plurality of targets based on the sensing signal at the current moment; a processing module, configured to display sensing points of the respective targets on a map according to the location information and the signal energy of the respective targets; and determine motion trajectories based on a plurality of sensing points displayed on the map at the current moment and a plurality of historical sensing points displayed within a time period before the current moment, where each motion trajectory is used to characterize a moving target; an output module, configured to decompose sensed information of one or more moving targets that are sensed on one or more channels for outputting.

In yet another aspect, an electronic device is provided, where the electronic device includes: a memory and a processor, where the memory and the processor are coupled; the memory is used to store a computer program; and when the processor executes the computer program, the multi-target trajectory decomposition observation method according to any of the above embodiments is implemented.

In yet another aspect, a computer-readable storage medium is provided, where computer program instructions are stored on the computer-readable storage medium, when the computer program instructions are performed by the processor, the multi-target trajectory decomposition observation method according to any of the above embodiments is implemented.

In yet another aspect, a computer program product is provided, where the computer program product comprises computer program instructions, when the computer program instructions are executed by a processor, the multi-target trajectory decomposition observation method according to any of the above embodiments is implemented.

## BRIEF DESCRIPTION OF THE DRAWINGS

FIG. 1 is a schematic diagram of a multi-target sensing system according to some embodiments.
FIG. 2 is a schematic flowchart of a trajectory decomposition observation method according to some embodiments.
FIG. 3 is a schematic diagram of a map display frame according to some embodiments.
FIG. 4 is a schematic diagram of another map display frame according to some embodiments.
FIG. 5 is a schematic diagram of yet another map display frame according to some embodiments.
FIG. 6 is a schematic flowchart of another trajectory decomposition observation method according to some embodiments.
FIG. 7 is a schematic diagram of motion trajectories of multiple targets according to some embodiments.
FIG. 8 is a schematic diagram of an output for a motion trajectory according to some embodiments.
FIG. 9 is a schematic flowchart of yet another trajectory decomposition observation method according to some embodiments.
FIG. 10 is a schematic diagram of a sensing point according to some embodiments.
FIG. 11 is a schematic diagram of components of a trajectory decomposition apparatus according to some embodiments.
FIG. 12 is a structural diagram of an electronic device according to some embodiments.

## DETAILED DESCRIPTION

In order to enable those skilled in the art to better understand the technical solutions in the embodiments of the present disclosure, the technical solutions in the present disclosure will be described clearly and completely in conjunction with the accompanying drawings.

Obviously, the described embodiments are merely a portion of embodiments of the present disclosure, but not all of embodiments of the present disclosure. All other embodiments obtained based on the embodiments of the present disclosure by those of ordinary skill in the art without paying any creative effort shall be included in the protection scope of the present disclosure.

It should be noted that in the present disclosure, wordings, such as "exemplarily" or "for example" and variations thereof are used to indicate examples, illustrations, or clarifications. Any embodiment or design solution described in the present disclosure with wordings such as "exemplarily" or "for example" should not be illustrated as being more preferred or advantageous over other embodiments or design solutions. Specifically, the usage of the wordings such as "exemplarily" or "for example" is intended to present relevant concepts in a concrete way.

Hereinafter, terms such as "first" and "second" are used for descriptive purposes only, and are not to be understood as indicating or implying the relative importance or implicitly indicating the number of indicated technical features. Thus, features limited with the wordings such as "first" or "second" may explicitly or implicitly include one or more of the features.

In the description of the present disclosure, unless otherwise specified, a character "/" means an "or" relationship, for example, "A/B" may represent A or B. The term "and/or" includes any and all combinations of one or more related listed items. For example, only A, only B, only C, A and B, A and C, B and C, or A, B and C. In addition, "at least one" and variations thereof means one or more, and "plurality" or "multiple" and variations thereof means two or more.

In some embodiments, ubiquitous sensing is typically applied to a simpler usage scenario. Taking a scenario where radar signals are used for target sensing as an example, a radar signal emitted by a radar device deployed at an airport may be used to sense an airplane in the air, and a vehicle-mounted radar may be used for target sensing within a short distance, etc. Herein, a sensed target and an environment for sensing are relatively simple.

In some embodiments, there is also a need for ubiquitous sensing in a complex scenario where there are multiple sensed targets, such as an indoor multi-path environment, a ground multi-building environment, an outdoor multi-vehicle environment, and a shopping mall multi-person environment. In the complex scenario, there may be multiple types of sensed targets in the environment, such as a car, people, and an animal. However, in the complex scenario, there are many interfering objects, such as leaves, fans, etc., and trajectories of multiple moving sensed targets may intersect with each other. Currently, the sensing technology for a simple environment is not conducive to multi-target detection in the complex scenario. Therefore, how to effectively identify and present trajectories of multiple targets in the complex environment is a problem that needs to be solved urgently.

In order to solve the above problem, a multi-target trajectory decomposition observation method is provided in the embodiments of the present disclosure. Based on the method, a situation where trajectories of multiple targets intersect with each other, which is inconvenient for viewing, can be avoided, the trajectories of respective targets and other sensed information can be effectively identified and distinguished, and further, the accuracy of multi-target trajectory displaying and recognition can be improved.

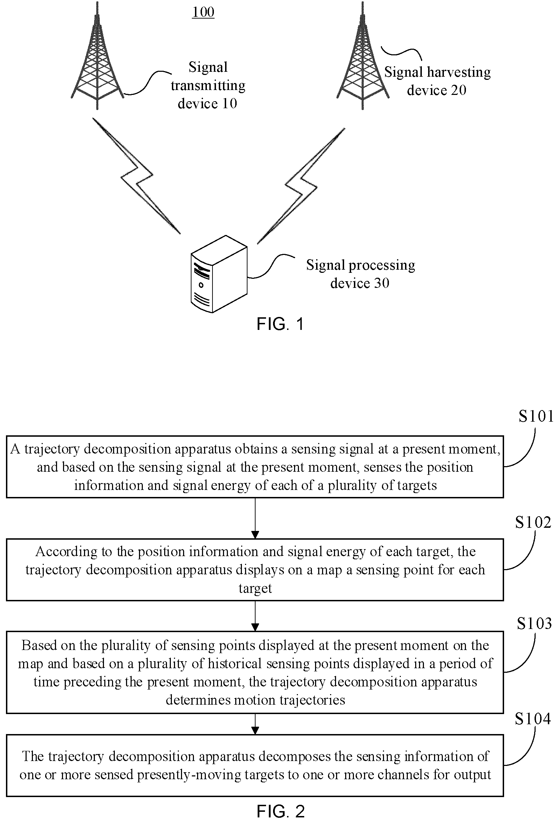

As shown in FIG. 1, a multi-target sensing system 100 is provided in the embodiments of the present disclosure. The multi-target sensing system 100 includes a signal transmitting device 10, a signal harvesting device 20 and a signal processing device 30. The signal transmitting device 10 and the signal harvesting device 20 are respectively connected to the signal processing device 30.

It should be understood that a connection mode between the signal transmitting device 10 and the signal processing device 30 or a connection mode between the signal harvesting device 20 and the signal processing device 30 may be a wireless connection, such as a Bluetooth connection, a Wi-Fi connection, etc. Alternatively, the above connection mode can also be a wired connection, such as an optical fiber connection, etc., which is not limited in the present disclosure.

Exemplarily, the multi-target sensing system 100 may utilize wireless radio frequency (radio frequency, RF) signals widely existing in the environment, such as WiFi, long range radio (long range radio, LoRa), the 4th generation mobile communication technology (4th generation mobile communication technology, 4G)/5th generation mobile communication technology (5th generation mobile communication technology, 5G), Bluetooth, etc., so as to sense people and the environment while wireless communication functions are supported. Ubiquitous wireless sensing has advantages such as low cost, non-intrusiveness, high universality and high privacy.

The signal transmitting device 10 is configured to transmit sensing signal beams to different directions in a sensing scenario, that is, the signal transmitting device 10 is a device that initiates sensing, and may also be referred to as an initiator. Exemplarily, the signal transmitting device 10 may be a network device or a terminal device in a wireless network system.

For example, the signal transmitting device 10 may be a network device, or a device having functions of the network device. The signal transmitting device 10 may be configured to implement functions such as resource scheduling, wireless resource management, and wireless access control of a terminal device. Exemplarily, the signal harvesting device 10 may be any network device among a small base station, a wireless access point, a transmission receive point (transmission receive point, TRP), a transmission point (transmission point, TP), and some other access nodes, for example, the signal transmitting device 10 may be a WiFi access point (WiFi access point, WiFi AP).

For another example, the signal transmitting device 10 may be a terminal device, or a device having functions of the terminal device. It should be noted that the terminal device may also be referred to as a terminal, a user equipment (user equipment, UE), a mobile station, a mobile terminal, etc. The terminal device may be a mobile phone, a tablet computer, a computer with wireless transceiver functions, a virtual reality terminal device, an augmented reality terminal device, a wireless terminal in the industrial control, a wireless terminal in the self-driving, a wireless terminal in remote surgery, a wireless terminal in transportation safety, a wireless terminal in smart city, a wireless terminal in smart home, etc. A device form adopted by the terminal device is not limited in the embodiments of the present disclosure.

In some embodiments, the signal transmitting device 10 may be disposed in a sensing area where target sensing is required to be performed, so as to perform target sensing in the area.

The signal harvesting device 20 is configured to receive sensing signal beams from different directions and reflected by a sensed target in the sensing scenario. Exemplarily, the signal harvesting device 20 may also be a network device or a terminal device in the wireless network system.

In some embodiments, the signal harvesting device 20 and the signal transmitting device 10 may be the same device, or the signal harvesting device 20 and the signal transmitting device 10 may be two different devices independent from each other.

The signal processing device 30 may be configured to control the signal transmitting device 10 to transmit a sensing signal, or control the signal harvesting device 20 to harvest a sensing signal. The signal processing device 30 may also process a received signal to obtain sensed information, and analyze the sensed information to obtain a state of an object that is sensed in the environment.

In some embodiments, the multi-target sensing system 100 may also include a displaying device, where the displaying device may be a user equipment with functions of displaying videos or images. The displaying device may be configured to display the user with the state of the object that is sensed in the environment, obtained by analyzing the sensed information by the signal processing device 30. For example, the displaying device is used to display a map for a complex scenario, or display information such as a motion trajectory or a sensing point of one or more sensed targets sensed by the multi-target sensing system 100.

A multi-target trajectory decomposition observation apparatus 200 (hereinafter referred to as the trajectory decomposition apparatus 200 for ease of description) is further provided in some embodiments of the present disclosure, and the trajectory decomposition apparatus 200 is an execution subject of the multi-target trajectory decomposition observation method. The trajectory decomposition apparatus 200 may be the signal processing device 30, or a functional module in the signal processing device 30, or any computing device connected to the signal processing device 30, which is not limited in the embodiments of the present disclosure.

As shown in FIG. 2, a multi-target trajectory decomposition observation method is provided in the embodiments of the present disclosure. Exemplarily, the method is applied to the trajectory decomposition apparatus 200, and the method includes S101 to S104.

In S101, the trajectory decomposition apparatus 200 acquires a sensing signal at a current moment, and senses location information and signal energy of respective targets of a plurality of targets based on the sensing signal at the current moment.

The plurality of targets sensed through the sensing signal may be vehicles, animals, human bodies, fallen leaves or other things that can be sensed. It should be noted that these targets may include a target that is in a motion state, and may also include a target that is in a relatively static state.

In some embodiments, the trajectory decomposition apparatus 200 may control the signal transmitting device 10 to periodically initiate target sensing at a preset frequency, and then acquires the sensing signal harvested by the signal harvesting device 20. The preset frequency may be 50 milliseconds/time, 0.5 seconds/time, 1 second/time or other possible frequencies, which is not limited in the present disclosure.

It should be noted that a sensing signal at a certain moment can be used to sense a plurality of targets in a to-be-sensed area at that moment. The to-be-sensed area is an area where multi-target sensing is required to be performed, such as a shopping mall or supermarket area with multiple moving human bodies, an outdoor area with multiple buildings, etc. It should be understood that if there are a plurality of sensing targets in an area to be detected, sensing signals harvested at a certain moment are a plurality of signals from different targets.

In some embodiments, the trajectory decomposition apparatus 200 may determine a latency arrival angle spectrum at the current moment according to the sensing signal at the current moment. Furthermore, the trajectory decomposition apparatus 200 may determine the location information and signal energy of the respective targets of the plurality of targets according to the latency arrival angle spectrum.

The latency arrival angle spectrum is used to reflect signal latencies, angles of arrival and signal energy of the plurality of targets in the to-be-sensed area at the current moment.

The signal latency refers to a total duration between a start of a sensing signal being transmitted by the signal transmitting device 10 and an end of the sensing signal being received by the signal harvesting device 20, that is, a duration spent by the sensing signal being propagated in a transmission medium. It should be understood that the signal latencies of different targets may be different. Since a transmission speed of an electric frequency signal in the air is constant, a signal latency is used to indicate a distance between a target and the signal harvesting device 20.

An angle of arrival refers to indicating an angle between a transmission direction of a signal reflected by a target and received by the signal harvesting device 20 and a preset direction (e.g., the horizontal plane or a normal to the horizontal plane). The angle of arrival is used to indicate a relative orientation between the target and the signal harvesting device 20.

Accordingly, the trajectory decomposition apparatus 200 may determine location information of the target in the to-be-sensed area based on the signal latency and the angle of arrival.

Exemplarily, the trajectory decomposition apparatus 200 may use a plane rectangular coordinate system, a geocentric coordinate system, or a geographic coordinate system, etc., so as to represent the location information of the respective targets.

For example, the trajectory decomposition apparatus 200 may establish a plane rectangular coordinate system with any fixed point in the to-be-sensed area as the origin, and then determine location coordinates of the respective targets in the plane rectangular coordinate system.

The geocentric coordinate system is a spatial rectangular coordinate system established with the center of mass of the earth as the origin of the coordinate system. The geographic coordinate system uses a three-dimensional spherical surface to define a location on the earth's surface, thereby realizing a coordinate system that references points on the earth's surface through longitude and latitude. Of course, the location information of the respective targets may also be represented in other possible forms, which is not limited in the present disclosure.

It should be understood that the trajectory decomposition apparatus 200 determines locations of the respective targets on a map based on the location coordinates of the respective targets in the above coordinate system.

Signal energy is an amplitude of a sensing signal of a sensed target at the current moment, which is used to characterize a signal strength of the sensing signal of the target.

In S102, the trajectory decomposition apparatus 200 displays sensing points of the respective targets on a map according to the location information and the signal energy of the respective targets.

In some embodiments of the present disclosure, the map may be an electronic map of the to-be-sensed area. Exemplarily, the map may be a two-dimensional map for displaying planar geographic data of the to-be-sensed area, or the map may be a three-dimensional spatial map for displaying spatial geographic data of the to-be-sensed area.

A sensing point is an image block where a target is displayed on the map. The image block occupies one or more pixel points in the map, and a location of the image block on the map is used to reflect a location of the target indicated by the sensing point in the to-be-sensed area, and a pixel value of the image block displayed on the map is used to reflect a signal energy of the target.

In some embodiments, the trajectory decomposition apparatus 200 may determine location information of pixel points occupied by the sensing points of the respective targets in the map according to the location information of the respective targets.

Exemplarily, the trajectory decomposition apparatus 200 may determine location information of center pixel points of the respective targets in the map according to the location information of the respective targets, and determine the location information of the pixel points occupied by the sensing points in the map based on the location information of the center pixel points of the respective targets, shape information of the sensing points and size information corresponding to the sensing points.

Location information of a sensing point may be represented as: pixel coordinates of respective pixel points occupied by the sensing point in a display frame of the map. Alternatively, the trajectory decomposition device 200 may establish a plane rectangular coordinate system with a location of any pixel point of the to-be-sensed area in the map as the origin. At this time, the location information of the sensing point may also be represented as: plane coordinates of respective pixel points occupied by the sensing point in the plane rectangular coordinate system.

Exemplarily, any pixel point of the sensing point may be represented as $(X_i, Y_i)$. Herein, $X_i$ represents a horizontal coordinate of the pixel point in the display frame of the map, and $Y_i$ represents a vertical coordinate of the pixel point in the display frame of the map.

In addition, the shape information refers to a shape of an image block of a sensing point displayed on the map, which may be a circle, a square, a rectangle or other possible shapes. The size information refers to a size of an image block corresponding to a sensing point. For example, if an image block corresponding to a sensing point is a circle, the size information may include a radius length of the circle. For another example, if the image block corresponding to the sensing point is a rectangle, the size information may include a length and a width of the rectangle.

It should be understood that the shape information and size information of the sensing point can be preset, such as default parameters pre-stored in the trajectory decomposition apparatus 200. For another example, a user indicates the trajectory decomposition apparatus 200 to set through a terminal device.

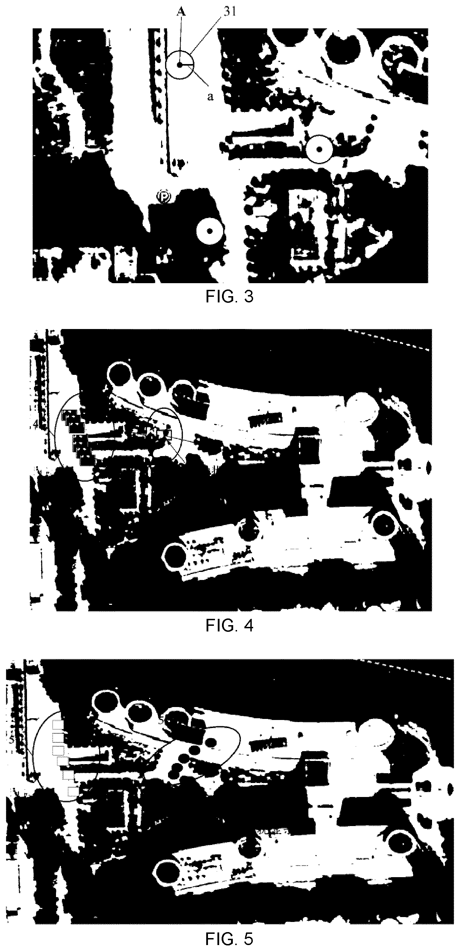

Exemplarily, as shown in FIG. 3, in the map, shapes of image blocks of respective sensing points are circular, point A is a center pixel point of target 1 in the map, all pixel points included in image block 31 are a sensing point of target 1 displayed in the map, and a length of a radius a of the image block 31 is size information of the sensing point.

In some embodiments, the trajectory decomposition apparatus 200 may also determine the pixel values of the pixel points occupied by the sensing points of the respective targets in the map according to the signal energy of the respective targets.

A pixel value is a value assigned by a computer when an image is digitized, which is used to characterize an average brightness information of a pixel point, or an average reflection (transmission) density information of the pixel point.

Exemplarily, for any target, the trajectory decomposition apparatus 200 may obtain first pixel values of respective pixel points occupied by the sensing point in the map based on the location information of the pixel points occupied by the sensing point of the target in the map, and adjust the first pixel values according to the signal energy of the target to obtain the pixel values of the pixel points occupied by the sensing point of the target in the map.

Furthermore, the trajectory decomposition apparatus 200 may display the sensing point of the target on the map according to the location information and the pixel values of the pixel points occupied by the sensing point of the target in the map.

In S103, the trajectory decomposition apparatus 200 determines motion trajectories based on a plurality of sensing points displayed on the map at the current moment and a plurality of historical sensing points displayed within a time period before the current moment, where each motion trajectory is used to characterize a moving target.

Exemplarily, a duration of the time period may be 40 seconds, 1 minute, 3 minutes or other reasonable durations, which is not limited in the present disclosure. It should be understood that the duration of the time period may be a duration preset by the trajectory decomposition apparatus 200 and capable of reflecting a motion state of the target.

Based on the relevant description in S101, it can be seen that the trajectory decomposition apparatus 200 may acquire the sensing signal at a preset frequency. Therefore, within the time period before the current moment, the trajectory decomposition apparatus 200 may obtain sensing signals at a plurality of moments. For a target that is in the to-be-sensed area before the current moment, the trajectory decomposition apparatus 200 may determine one or more historical sensing points of the target within a time period before the current moment.

Exemplarily, as shown in FIG. 4, seven image blocks in area 41 are the seven sensing points of target B, an image block B1 is a sensing point of the target B at the current moment and displayed on the map, and six image blocks in area 41 except the image block B1 are historical sensing points of the target B in the motion state. According to FIG. 4, among the seven sensing points of target B within the time period before the current moment, location information of the respective sensing points are different, which reflects that the location of the target B in actual space is changing, that is, target B is in the motion state.

A sensing point C1 in an area 42 is a sensing point where a target C is located. A displaying effect of the sensing point C1 is close to a displaying effect of a map background, which is a weak interference display, that is, a signal energy of a sensing signal for interfering the target C is low.

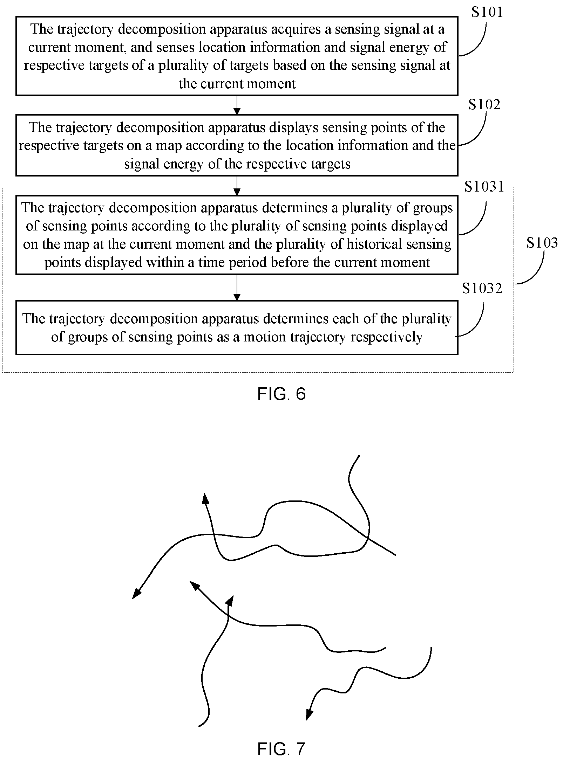

It should be noted that, based on, for example, the seven sensing points of the target B in FIG. 4, the trajectory decomposition apparatus 200 may determine a motion trajectory of the target B within the time period before the current moment. However, based on the sensing point C1, the trajectory decomposition apparatus 200 does not determine a motion trajectory of the target C. Thus, each motion trajectory is used to characterize a moving target. Alternatively, as shown in FIG. 5, a plurality of sensing points may be displayed in the map within a time period before the current moment, and the plurality of sensing points may include, for example, a sensing point of a moving target 51, a sensing point of a moving target 52, and a sensing point of a moving target 53. In some embodiments, as shown in FIG. 6, S103 may be implemented as the following S1031-S1032.

In S1031, the trajectory decomposition apparatus 200 determines a plurality of groups of sensing points according to the plurality of sensing points displayed on the map at the current moment and the plurality of historical sensing points displayed within the time period before the current moment.

In a group of sensing points, a time interval between any two adjacent sensing points is less than a preset duration, and a distance between any two adjacent sensing points is less than a preset distance. It should be understood that a group of sensing points belongs to a same target.

The preset duration may be 50 milliseconds, 0.5 seconds, 1 second or other possible durations, which is not limited in the present disclosure. It should be understood that the preset duration is less than or equal to a time interval between times of harvesting two adjacent sensing signal by the trajectory decomposition apparatus 200.

The trajectory decomposition apparatus 200 may determine a possible actual motion distance of a target based on the preset duration and a possible maximum motion speed of the to-be-sensed target. Furthermore, the trajectory decomposition apparatus 200 may determine a distance between the pixel points displayed in the map and corresponding to the possible actual motion distance, i.e., the preset distance.

Exemplarily, for the plurality of sensing points displayed at the current moment and the plurality of historical sensing points displayed within the time period before the current moment, the trajectory decomposition apparatus 200 sequentially determines whether any two adjacent sensing points belong to the sensing points of a same target based on the preset duration and the preset distance, i.e., determines whether any two sensing points can be classified into the same group.

The trajectory decomposition apparatus 200 traverses all the sensing points and determines the plurality of groups of sensing points. It should be understood that if a sensing point cannot be classified into a same group with other sensing points, then this sensing point is a sensing point of a target in a static state or an interfering sensing point existing in the environment. A number of sensing points in a group of sensing points may be greater than a preset number.

The preset number may be 5, 8, 10 or other possible numbers, which is not limited in the present disclosure.

It should be understood that if a very small number of sensing points are grouped into one group, for example, two sensing points are grouped into one group, that is, a target has only two sensing points within the time period before the current moment, then this group of sensing points cannot intuitively show a motion situation of the target. Therefore, upon determining the plurality of groups of sensing points, a number of sensing points in each group may also be limited.

In S1032, the trajectory decomposition apparatus 200 determines each of the plurality of groups of sensing points as a motion trajectory respectively.

Exemplarily, taking seven sensing points of the target B in FIG. 4 as an example, the seven sensing points are an activity trajectory of the target B within a time period before the current moment.

In S104, the trajectory decomposition apparatus 200 decomposes sensed information of one or more moving targets that is sensed into one or more channels for outputting.

The sensed information includes one or more of location information, signal energy, a motion parameter, or a motion trajectory within a time period before the current moment of a target.

The motion parameter is a parameter such as an average speed, a motion distance, an earliest appearance time, and an appearance duration of a target determined by the trajectory decomposition apparatus 200 based on a motion trajectory of the target.

In some embodiments, one channel is used to output sensed information of one moving target; or one channel is used to output sensed information of a plurality of moving targets. It should be understood that different channels may output sensed information of different numbers of moving targets.

It should be noted that, in the process of target sensing in a complex environment, the trajectory decomposition apparatus 200 may sense moving sensed targets. As shown in FIG. 7, motion trajectories of a plurality of moving sensed targets may intersect and overlap within each other, thus making these motion trajectories difficult to distinguish. After the plurality of moving targets are determined, the trajectory decomposition apparatus 200 may decompose the plurality of targets, thereby outputting a motion trajectory of a target in one channel, which is convenient for a user to view or for subsequent analysis and processing of a device.

Of course, one channel may also output motion trajectories of 2, 3 targets or other smaller number of targets. Furthermore, a channel may further output other sensed information.

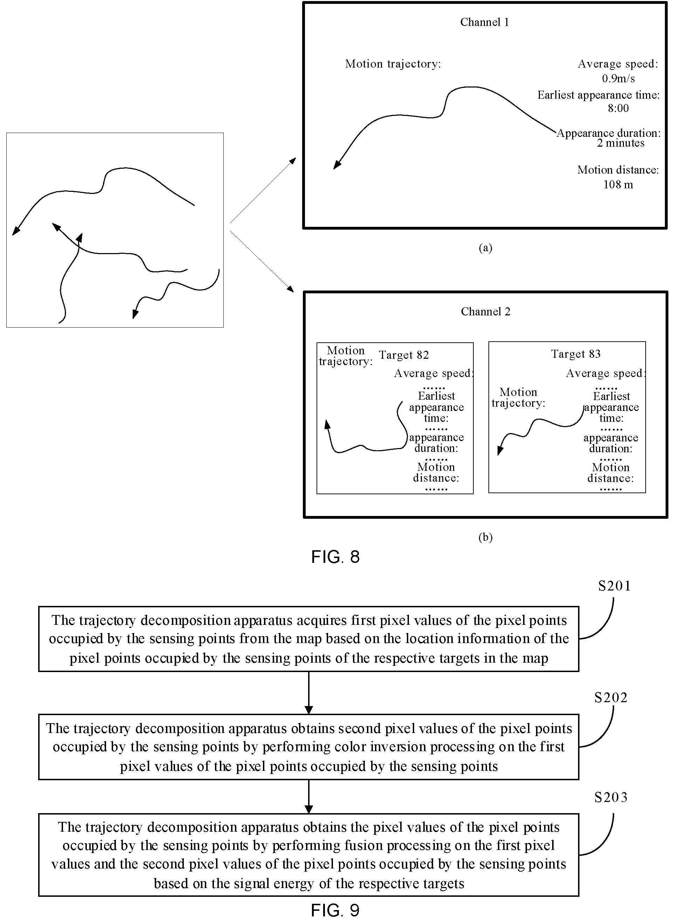

Exemplarily, in response to a selection instruction of a user for a target 81, as shown in (a) in FIG. 8, the trajectory decomposition apparatus 200 may output sensed information such as a motion trajectory, an average speed, a motion distance, an earliest appearance time, etc., of the target 81 to a user equipment through channel 1, and display the sensed information to the user through a displaying assembly of the user equipment. Alternatively, as shown in (b) in FIG. 8, the trajectory decomposition apparatus 200 may further output sensed information such as motion trajectories, average speeds, motion distances, earliest appearance times, etc., of a target 82 and a target 83 to the user equipment through a channel 2, and display the sensed information to the user through the displaying assembly of the user equipment. In the methods provided in the embodiments of the present disclosure, the sensing points of respective targets are displayed on the map based on the acquired sensing signal, the sensing points displayed on the map can intuitively show locations of respective targets, which is convenient for a user to view. In this method, the moving target indicated by the motion trajectory is decomposed on the one or more channels for outputting based on the motion trajectory within the time period. Therefore, for a complex environment with multiple targets, a situation where trajectories of multiple targets intersects with each other, which is inconvenient for viewing, can be avoided, and the trajectories of respective targets and other sensed information can be effectively identified and distinguished, and further, the accuracy of multi-target trajectory displaying and recognition can be improved.

In some embodiments, based on the embodiments shown in FIG. 3 above, as shown in FIG. 9, the process in which the trajectory decomposition apparatus 200 determines the pixel values of the pixel points occupied by the sensing points of the respective targets in the map according to the signal energy of the respective targets may include S201 to S203.

In S201, the trajectory decomposition apparatus 200 acquires first pixel values of the pixel points occupied by the sensing points from the map based on the location information of the pixel points occupied by the sensing points of the respective targets in the map.

Exemplarily, for any sensing point, the trajectory decomposition apparatus 200 intercepts, based on the location information of the pixel points occupied by the sensing point of a target in the map, a first image block corresponding to the location information in the map that does not display the sensing point, where pixel values of pixel points occupied by the first image block are the first pixel values.

In S202, the trajectory decomposition apparatus 200 obtains second pixel values of the pixel points occupied by the sensing points by performing color inversion processing on the first pixel values of the pixel points occupied by the sensing points.

An inversed color (also referred to as a complementary color) refers to a color that can be turned into white upon superimposed with the primary color. For example, a complementary color of red is green, a complementary color of blue is orange, a complementary color of yellow is purple, etc.

The color inversion processing is to invert a color of each pixel point in an original image to obtain a new pixel value of the each pixel point, where the new pixel value is a second pixel value.

Exemplarily, the trajectory decomposition apparatus 200 sequentially performs color inversion processing on each pixel point occupied by any sensing point on the map to obtain a second pixel value of the each pixel point in the sensing point.

It should be noted that a second image block of a sensing point can be obtained by performing color inversion processing on the first pixel values of the pixel points occupied by a sensing point, where pixel values of respective pixel points in the second image block are the second pixel values. The second image block is different from an original image block of the area on the map, and a color displayed by the second image block is more significantly different.

In some embodiments, the trajectory generation apparatus may also obtain a second pixel value through image enhancement or other image processing modes.

In S203, the trajectory decomposition apparatus 200 obtains the pixel values of the pixel points occupied by the sensing points by performing fusion processing on the first pixel values and the second pixel values of the pixel points occupied by the sensing points based on the signal energy of the respective targets.

In some embodiments, the trajectory decomposition apparatus 200 determines first weights corresponding to the first pixel values and second weights corresponding to the second pixel values based on the signal energy of the respective targets; and obtains the pixel values of the respective pixel points in the image blocks corresponding to the sensing points by performing weighting processing on the first pixel values and the second pixel values of the respective pixel points in the image blocks corresponding to the sensing points based on the first weights and the second weights.

It should be noted that there is a positive correlation between the signal energy of the respective targets and the second weights. That is, the greater the value of signal energy of a target, the greater the second weight determined based on the target; and conversely, the smaller the value of the signal energy of a target, the smaller the second weight determined based on the target.

In some embodiments, the trajectory generation apparatus first determines a maximum signal energy value and a minimum signal energy value among the signal energy of the plurality of targets; and then determine ratios between differences of the signal energy of the respective targets minus the minimum energy value and differences of the maximum signal energy value minus the minimum energy value as the second weights.

Exemplarily, a second weight of a target may be obtained according to formula (1).

$$a = \frac{(W_i - W_{min})}{(W_{max} - W_{min})} \qquad \text{Formula (1)}$$

where a is a first weight; $W_i$ is a signal energy value of a target; $W_{min}$ is a minimum signal energy value among the signal energy of the plurality of targets; $W_{max}$ is a maximum signal energy value among the signal energy of the plurality of targets.

After the second weight is determined, a first weight may be determined according to the second weight. Exemplarily, a first weight may be (1- a).

At this time, pixel values of respective pixel points in an image block corresponding to a sensing point may be obtained by formula (2).

$$Q_{ix} = (1 - a) * E_{1x} + a * E_{2x} \qquad \text{Formula (2)}$$

where $Q_{ix}$ is a pixel value of a pixel point x in an image block corresponding to a sensing point; a is first weight; $E_{1x}$ is a first pixel value of the pixel point x, and $E_{2x}$ is a second pixel value of the pixel point x.

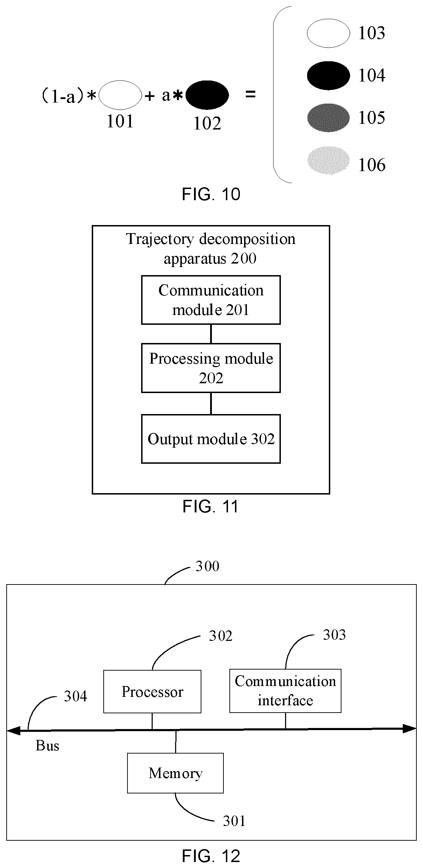

Exemplarily, as shown in FIG. 10, the image block 101 is a first image block of a sensing point, and pixel values of respective pixel points in the first image block are first pixel values. The image block 102 is a second image block of the sensing point, and pixel values of respective pixel points in the second image block are second pixel values. According to the first weights, the second weights and formula (2), an image block after performing fusion processing and displayed on the map of the sensing point (such as an image block 103, an image block 104, an image block 105 or an image block 106 in FIG. 10) is obtained.

In some embodiments, in a case where the signal energy of a sensing point is the minimum energy value, a second weight obtained based on formula (1) is 0, and a first weight is 1 at this time. The image block obtained after performing fusion processing is the image block 103 in FIG. 10. As shown in FIG. 10, a displaying effect of the image block 103 is the same as a displaying effect of the image block 101.

In some other embodiments, in a case where the signal energy of a sensing point is the maximum signal energy value, that is, a second weight obtained based on formula (1) is 1, and a first weight is 0 at this time. The image block obtained after performing fusion processing is the image block 104 in FIG. 10. As shown in FIG. 10, a displaying effect of the image block 104 is the same as a displaying effect of the image block 102.

In still other embodiments, if the signal energy of the sensing point is relatively large, the second weight obtained based on formula (1) is also relatively large, and the obtained second weight is greater than the first weight, for example, the second weight is 0.8 and the first weight is 0.2. At this time, the image block obtained after performing fusion processing may be the image block 105 in FIG. 10. As shown in FIG. 10, compared with the image block 101, a displaying effect of the image block 105 is closer to a displaying effect of the image block 102.

In still other embodiments, if the signal energy of the sensing point is relatively small, the second weight obtained based on formula (1) is also relatively small, and the obtained second weight is smaller than the first weight, for example, the second weight is 0.1 and the first weight is 0.9. At this time, the image block obtained after performing fusion processing may be the image block 106 in FIG. 10. As shown in FIG. 10, compared with the image block 102, a displaying effect of the image block 106 is closer to a displaying effect of the image block 101.

It should be understood that the greater the second weight, that is, the greater a proportion of the second pixel values, the greater the difference between the displaying effect of the image block corresponding to the sensing point (such as color) and a displaying effect of the map background at that location and without displaying the sensing point (such as the image block 104 and the image block 105 in FIG. 10). At this time, the sensing point is displayed more clearly on the map and can be observed more accurately. On the contrary, the smaller the second weight, that is, the smaller the proportion of the second pixel value, the closer the difference between the displaying effect of the image block corresponding to the sensing point and the displaying effect of the map background on the at that location and without displaying the sensing point (such as the image block 103 and the image block 106). At this time, the displaying of the sensing point on the map is relatively blurred.

In some embodiments, based on step S103, after the motion trajectories are determined, the second weights of respective sensing points in the motion trajectories may be increased, and the pixel values of the pixel points in the sensing points that constitute the motion trajectories can be adjusted again to cause the displaying effect of the sensing points more obvious from the displaying effect of the map background without displaying the sensing point, thereby making the displaying of the motion trajectories of the targets on the map more intuitive.

Based on the above embodiments, the methods provided in the present disclosure can simultaneously display a large number of sensing points of the plurality of targets in the map, and displaying effects of the sensing points are related to energy values of the respective targets. The energy value is used to determine a degree of a difference between a displaying effect of a sensing point on the map and a displaying effect of a map background without displaying the sensing point. On the one hand, for a target with higher energy, i.e., a target that may be in a motion state, a sensing point of the target can be clearly displayed at a certain moment, and a plurality of sensing points of the target with nearby locations can be further clearly displayed within a time period, so as to facilitate the observation of the motion trajectory. On the other hand, for a target with lower energy, a displaying effect of a corresponding sensing point may be similar to that of map background on the map at a certain moment. In this way, a sense of presence of the sensing point on the map may be reduced, thus the motion trajectory of the target in the motion state can be displayed more intuitively on the map.

It can be understood that, in order to implement the above functions, the trajectory decomposition apparatus 200 includes corresponding hardware structures and/or software modules for implementing various functions. Those skilled in the art should easily realize that the present disclosure can be implemented in the form of hardware or a combination of hardware and computer software in combination with algorithms and steps described in the embodiments of the present disclosure. Whether a certain function is implemented by hardware or by computer software driving hardware depends on the specific application and design constraint conditions of the technical solutions. Professional technicians may use different methods to implement the described functions for each specific application, but such implementation should not be considered beyond the scope of the present disclosure.

The embodiments of the present disclosure may divide the trajectory decomposition apparatus 200 into functional modules according to the above method embodiments. For example, division of each functional modules may be performed corresponding to each function, or two or more functions may be integrated into one functional module. The integrated module may be implemented in the form of hardware, or may be implemented in the form of software. It should be noted that the division of the modules in the embodiments of the present disclosure is illustrated, which is only a logical functional division, and there may be other division manners in an actual implementation. The following is illustrated by taking an example of a division of each functional module corresponding to each function.

As shown in FIG. 11, the trajectory decomposition apparatus 200 includes a communication module 201, a processing module 202 and an output module 203.

The communication module 201 is configured to acquire a sensing signal at a current moment, and sense location information and signal energy of respective targets of a plurality of targets based on the sensing signal at the current moment.

The processing module 202 is configured to display sensing points of the respective targets on a map according to the location information and the signal energy of the respective targets; and determine motion trajectories based on a plurality of sensing points displayed on the map at the current moment and a plurality of historical sensing points displayed within a time period before the current moment, where each motion trajectory is used to characterize a moving target.

The output module 203 is configured to decompose output sensed information of one or more moving targets that is sensed on one or more channels for outputting.

In some embodiments, the processing module 202 is configured to: determine location information of pixel points occupied by the sensing points of the respective targets in the map according to the location information of the respective targets; determine pixel values of the pixel points occupied by the sensing points of the respective targets in the map according to the signal energy of the respective targets; and display the sensing points of the respective targets in the map according to the location information and the pixel values of the pixel points occupied by the sensing points of the respective targets in the map.

In some embodiments, the processing module 202 is further configured to: determine location information of center pixel points of the respective targets in the map according to the location information of the respective targets; and determine the location information of the pixel points occupied by the sensing points in the map based on the location information of the center pixel points of the respective targets, shape information of the sensing points and size information corresponding to the sensing points.

In some embodiments, the processing module 202 is further configured to: acquire first pixel values of the pixel points occupied by the sensing points from the map based on the location information of the pixel points occupied by the sensing points of the respective targets in the map; obtain second pixel values of the pixel points occupied by the sensing points by performing color inversion processing on the first pixel values of the pixel points occupied by the sensing points; and obtain the pixel values of the pixel points occupied by the sensing points by performing fusion processing on the first pixel values and the second pixel values of the pixel points occupied by the sensing points based on the signal energy of the respective targets.

In some embodiments, the processing module 202 is further configured to: determine first weights corresponding to the first pixel values and second weights corresponding to the second pixel values based on the signal energy of the respective targets, where there is a positive correlation between the signal energy of the respective targets and the second weights, and there is a negative correlation between the signal energy of the respective targets and the first weights; and obtain the pixel values of the respective pixel points in the image blocks corresponding to the sensing points by performing weighting processing on the first pixel values and the second pixel values of the respective pixel points in the image blocks corresponding to the sensing points based on the first weights and the second weights.

In some embodiments, the processing module 202 is further configured to: determine a maximum signal energy value and a minimum energy value among the signal energy of the plurality of targets; determine ratios between differences of the signal energy of the respective targets minus the minimum energy value and a difference of the maximum signal energy value minus the minimum energy value as the second weights; determine the first weights according to the second weights.

In some embodiments, the processing module 202 is further configured to: adjust pixel values of pixel points occupied by sensing points in the motion trajectories in the map by increasing second weights of the sensing points in the motion trajectories.

In some embodiments, the processing module 202 is further configured to: determine a plurality of groups of sensing points according to the plurality of sensing points displayed on the map at the current moment and the plurality of historical sensing points displayed within the time period before the current moment, where in a group of sensing points, a time interval between sensing times of any two adjacent sensing points is less than a preset duration, and a distance between the any two sensing points is less than a preset distance; and determine each of the plurality of groups of sensing points as a motion trajectory respectively.

In a situation where the functions of the above-mentioned integrated modules are implemented in the form of hardware, an electronic device 300 is provided in the embodiments of the present disclosure, where the electronic device 300 may be a trajectory decomposition apparatus 200. As shown in FIG. 12, the electronic device 300 includes a processor 302 and a bus 304. In some embodiments, the electronic device 300 may further include a memory 301; in some embodiments, the electronic device 300 may further include a communication interface 303.

The processor 302 may be any of various exemplary logical blocks, modules and circuits described for implementing or executing the embodiments of the present disclosure. The processor 302 may be a central processor, a general-purpose processor, a digital signal processor, an application specific integrated circuit, a field programmable gate array, or other programmable logic component, a transistor logic component, a hardware assembly, or any combination thereof. The processor 302 may implement or perform various exemplary logical blocks, modules and circuits described in combination with the embodiments of the present disclosure. The processor 302 may also be a combination that implements computing functions, for example, the processor 302 includes a combination of one or more microprocessors, a combination of a DSP (digital signal processor) and a microprocessor, or the like.

The communication interface 303 is configured to connect to other devices through a communication network. The communication network may be the Ethernet, a wireless access network, a wireless local area network (wireless local area network, WLAN), or the like.

The memory 301 may be a read-only memory (read-only memory, ROM) or other types of static storage devices that can store static information and instructions, a random access memory (random access memory, RAM), or other types of dynamic storage devices that can store information and instructions, or an electrically erasable programmable read-only memory (electrically erasable programmable read-only memory, EEPROM), a magnetic disk storage medium or any other magnetic storage devices, or any other medium that can be used to carry or store desired program codes with instructions or data and can be accessed by a computer, which is not limited thereto.

In some embodiments, the memory 301 may exist independently from the processor 302, and the memory 301 may be connected to the processor 302 through the bus 304 for storing instructions or program codes. When the processor 302 invokes and executes the instructions or program codes stored in the memory 301, the processor 302 may implement the multi-target trajectory decomposition observation method provided in the embodiments of the present disclosure.

In some other embodiments, the memory 301 may be integrated with the processor 302.

The bus 304 may be an extended industry standard architecture (extended industry standard architecture, EISA) bus, or the like. The bus 304 may be classified as an address bus, a data bus, a control bus, or the like. For ease of representation, only one bold line is used in FIG. 12 for representing the bus 304, which however does not mean that there is only one bus or one type of bus.

A computer-readable storage medium (for example, a non-transitory computer-readable storage medium) is provided in some embodiments of the present disclosure, the computer-readable storage medium has stored computer program instructions, and the computer program instructions, upon being executed by a computer, enable the computer to perform the multi-target trajectory decomposition observation method as described in any one of the above embodiments.

For example, the computer-readable storage medium may include, but not limited to: a magnetic storage device (e.g., a hard disk, a floppy disk, or a magnetic tape, etc.), an optical disk (e.g., a compact disk (Compact Disk, CD), a digital versatile disk (Digital Versatile Disk, DVD), etc.), a smart card and a flash memory device (e.g., an erasable programmable read-only memory (Erasable Programmable Read-Only Memory, EPROM), a card, a stick or a key driver, etc.). The various computer-readable storage medium described in the present disclosure may represent one or more devices for storing information and/or other machine-readable storage medium for storing information. The term "machine-readable storage medium" may include, but not limited to, a wireless channel and various other media capable of storing, containing, and/or carrying instructions and/or data.

A computer program product including computer instructions is provided in some embodiments of the present disclosure, when the computer program product is run on a computer, so as to enable the computer to perform the multi-target trajectory decomposition observation method as described in any one of the above embodiments.

The above descriptions are merely specific implements of the present disclosure, but the scope of protection of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

**Claims**

1. A multi-target trajectory decomposition observation method, comprising:

    acquiring a sensing signal at a current moment, and sensing location information and signal energy of respective targets of a plurality of targets based on the sensing signal at the current moment;
    displaying sensing points of the respective targets on a map according to the location information and the signal energy of the respective targets;
    determining motion trajectories based on a plurality of sensing points displayed on the map at the current moment and a plurality of historical sensing points displayed within a time period before the current moment, wherein each motion trajectory is used to characterize a moving target;
    decomposing sensed information of one or more moving targets that is sensed on one or more channels for outputting.

2. The method according to claim 1, wherein the displaying the sensing points of the respective targets in the map according to the location information and the signal energy of the respective targets comprises:

    determining location information of pixel points occupied by the sensing points of the respective targets in the map according to the location information of the respective targets;
    determining pixel values of the pixel points occupied by the sensing points of the respective targets in the map according to the signal energy of the respective targets; and
    displaying the sensing points of the respective targets in the map according to the location information and the pixel values of the pixel points occupied by the sensing points of the respective targets in the map.

3. The method according to claim 2, wherein the determining the location information of the pixel points occupied by the sensing points of the respective targets in the map according to the location information of the respective targets comprises:

> determining location information of center pixel points of the respective targets in the map according to the location information of the respective targets; and
>
> determining the location information of the pixel points occupied by the sensing points in the map based on the location information of the center pixel points of the respective targets, shape information of the sensing points and size information corresponding to the sensing points.

4. The method according to claim 3, wherein the determining the pixel values of the pixel points occupied by the sensing points of the respective targets in the map according to the signal energy of the respective targets comprises:

> acquiring first pixel values of the pixel points occupied by the sensing points from the map based on the location information of the pixel points occupied by the sensing points of the respective targets in the map;
>
> obtaining second pixel values of the pixel points occupied by the sensing points by performing color inversion processing on the first pixel values of the pixel points occupied by the sensing points;
>
> obtaining the pixel values of the pixel points occupied by the sensing points by performing fusion processing on the first pixel values and the second pixel values of the pixel points occupied by the sensing points based on the signal energy of the respective targets.

5. The method according to claim 4, wherein the obtaining the pixel values of respective pixel points in image blocks corresponding to the sensing points by performing fusion processing on the first pixel values and the second pixel values of the respective pixel points in the image blocks corresponding to the sensing points based on the signal energy of the respective targets comprises:

> determining first weights corresponding to the first pixel values and second weights corresponding to the second pixel values based on the signal energy of the respective targets, wherein there is a positive correlation between the signal energy of the respective targets and the second weights, and there is a negative correlation between the signal energy of the respective targets and the first weights;
>
> obtaining the pixel values of the respective pixel points in the image blocks corresponding to the sensing points by performing weighting processing on the first pixel values and the second pixel values of the respective pixel points in the image blocks corresponding to the sensing points based on the first weights and the second weights.

6. The method according to claim 5, wherein the determining the first weights corresponding to the first pixel values and the second weights corresponding to the second pixel values based on the signal energy of the respective targets comprises:

> determining a maximum signal energy value and a minimum energy value among the signal energy of the plurality of targets;
>
> determining ratios between differences of the signal energy of the respective targets minus the minimum energy value and a difference of the maximum signal energy value minus the minimum energy value as the second weights;
>
> determining the first weights according to the second weights.

7. The method according to claim 6, wherein after the determining the motion trajectories based on the plurality of sensing points displayed on the map at the current moment and the plurality of historical sensing points displayed within the time period before the current moment, the method further comprises:
adjusting pixel values of pixel points occupied by the sensing points in the motion trajectories in the map by increasing second weights of the sensing points in the motion trajectories.

8. The method according to any one of claims 1 to 7, wherein the determining the motion trajectories based on the plurality of sensing points displayed on the map at the current moment and the plurality of historical sensing points displayed within the time period before the current moment comprises:

> determining a plurality of groups of sensing points according to the plurality of sensing points displayed on the map at the current moment and the plurality of historical sensing points displayed within the time period before the current moment, wherein a number of sensing points in one group of sensing points is greater than a preset number, and in any group of sensing points, a time interval between sensing times of any two adjacent sensing points is less than a preset duration, and a distance between the two sensing points is less than a preset distance; determining each of the plurality of groups of sensing points as a motion trajectory respectively.

9.  The method according to any one of claims 1 to 7, wherein the sensed information includes one or more of location information, signal energy, a motion parameter, or a motion trajectory within a time period before the current moment.

10. The method according to any one of claims 1 to 7, wherein

    one of the one or more channels is used to output sensed information of one moving target; or
    the one of the one or more channels is used to output sensed information of a plurality of moving targets.

11. An electronic device, comprising: a processor and a memory for storing instructions that executable by the processor; wherein
    the processor is configured to execute the instructions, so as to enable the electronic device to execute the multi-target trajectory decomposition observation method according to any one of claims 1 to 10.

12. A computer-readable storage medium, wherein computer instructions are stored on the computer-readable storage medium, the computer instructions upon being ran on an electronic device, enable the electronic device to execute the multi-target trajectory decomposition observation method according to any one of claims 1 to 10.

13. A computer program product, wherein the computer program product comprises computer program instructions, the computer program instructions, upon being ran on a computer, enable the computer to execute the multi-target trajectory decomposition observation method according to any one of claims 1 to 10.

100

Signal
transmitting
device 10

Signal harvesting
device 20

Signal processing
device 30

FIG. 1

S101

A trajectory decomposition apparatus obtains a sensing signal at a present moment, and based on the sensing signal at the present moment, senses the position information and signal energy of each of a plurality of targets

S102

According to the position information and signal energy of each target, the trajectory decomposition apparatus displays on a map a sensing point for each target

S103

Based on the plurality of sensing points displayed at the present moment on the map and based on a plurality of historical sensing points displayed in a period of time preceding the present moment, the trajectory decomposition apparatus determines motion trajectories

S104

The trajectory decomposition apparatus decomposes the sensing information of one or more sensed presently-moving targets to one or more channels for output

FIG. 2

FIG. 3

FIG. 4

FIG. 5

| S101 |
|---|
| The trajectory decomposition apparatus acquires a sensing signal at a current moment, and senses location information and signal energy of respective targets of a plurality of targets based on the sensing signal at the current moment |

| S102 |
|---|
| The trajectory decomposition apparatus displays sensing points of the respective targets on a map according to the location information and the signal energy of the respective targets |

| S1031 |
|---|
| The trajectory decomposition apparatus determines a plurality of groups of sensing points according to the plurality of sensing points displayed on the map at the current moment and the plurality of historical sensing points displayed within a time period before the current moment |

S103

| S1032 |
|---|
| The trajectory decomposition apparatus determines each of the plurality of groups of sensing points as a motion trajectory respectively |

FIG. 6

FIG. 7

Channel 1

Motion trajectory:

Average speed:
0.9m/s
Earliest appearance time:
8:00
Appearance duration:
2 minutes

Motion distance:
108 m

(a)

Channel 2

Motion trajectory: Target 82

Average speed:
......
Earliest
appearance
time:
......
appearance
duration:
......
Motion
distance:
......

Target 83

Average speed:
......
Motion
trajectory:
Earliest
appearance
time:
......
appearance
duration:
......
Motion
distance:
......

(b)

FIG. 8

S201

The trajectory decomposition apparatus acquires first pixel values of the pixel points occupied by the sensing points from the map based on the location information of the pixel points occupied by the sensing points of the respective targets in the map

S202

The trajectory decomposition apparatus obtains second pixel values of the pixel points occupied by the sensing points by performing color inversion processing on the first pixel values of the pixel points occupied by the sensing points

S203

The trajectory decomposition apparatus obtains the pixel values of the pixel points occupied by the sensing points by performing fusion processing on the first pixel values and the second pixel values of the pixel points occupied by the sensing points based on the signal energy of the respective targets

FIG. 9

$(1\text{-}a)*\bigcirc + a*\bullet = \begin{cases}\bigcirc\ 103 \\ \bullet\ 104 \\ \bullet\ 105 \\ \bullet\ 106\end{cases}$

101    102

FIG. 10

Trajectory decomposition
apparatus 200

Communication
module 201

Processing module
202

Output module 302

FIG. 11

300

302    303

304    Processor    Communication
interface

Bus

Memory

301

FIG. 12

## INTERNATIONAL SEARCH REPORT

| | |
|---|---|
| International application No. | **PCT/CN2023/096081** |

**A.    CLASSIFICATION OF SUBJECT MATTER**

H04W4/029(2018.01)i

According to International Patent Classification (IPC) or to both national classification and IPC

**B.    FIELDS SEARCHED**

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, VEN, CNKI, ENTXT, 3GPP: 运动轨迹, 感知, 能量, 像素, 位置, 地图, 显示, moving track, position, location, energy, pixel, map, sense, display

**C.    DOCUMENTS CONSIDERED TO BE RELEVANT**

| Category* | Citation of document, with indication, where appropriate, of the relevant passages | Relevant to claim No. |
|---|---|---|
| A | CN 113946640 A (SHENZHEN GENEW TECHNOLOGIES CO., LTD.) 18 January 2022 (2022-01-18)<br>entire document | 1-13 |
| A | CN 114549582 A (ZHEJIANG DAHUA TECHNOLOGY CO., LTD.) 27 May 2022 (2022-05-27)<br>entire document | 1-13 |
| A | CN 115046556 A (QINGDAO HAIER TECHNOLOGY CO., LTD. et al.) 13 September 2022 (2022-09-13)<br>entire document | 1-13 |
| A | WO 2019218824 A1 (TENCENT TECHNOLOGY (SHENZHEN) CO., LTD.) 21 November 2019 (2019-11-21)<br>entire document | 1-13 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 August 2023** | **07 August 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/096081**

| Patent document cited in search report | | | Publication date (day/month/year) | Patent family member(s) | | | Publication date (day/month/year) |
|---|---|---|---|---|---|---|---|
| CN | 113946640 | A | 18 January 2022 | None | | | |
| CN | 114549582 | A | 27 May 2022 | None | | | |
| CN | 115046556 | A | 13 September 2022 | None | | | |
| WO | 2019218824 | A1 | 21 November 2019 | US | 2020364443 | A1 | 19 November 2020 |

Form PCT/ISA/210 (patent family annex) (July 2022)

**REFERENCES CITED IN THE DESCRIPTION**

**Patent documents cited in the description**

• CN 202211338992X